# EUROPÄISCHE PATENTSCHRIFT

(11) **EP 2 203 672 B1**
(45) Veröffentlichungstag und Bekanntmachung des Hinweises auf die Patenterteilung: **04.12.2013**
(21) Anmeldenummer: 08845525.8
(22) Anmeldetag: 15.10.2008
(51) Int. Cl.: F16L 33/26, F16L 25/00

(54) **ANSCHLUSSVERBINDUNG UND VERFAHREN ZUM VERBINDEN EINER DÜNNWANDIGEN SCHLAUCHLEITUNG MIT EINEM KOHLENSTOFFHALTIGEN ANSCHLUSSTEIL**
ATTACHMENT CONNECTION, AND METHOD OF CONNECTING A THIN-WALLED HOSE LINE TO A CARBON-CONTAINING ATTACHMENT PART
ENSEMBLE DE RACCORDEMENT, ET PROCEDE DE RACCORDEMENT D'UN TUYAU FLEXIBLE A PAROI MINCE AVEC UNE PIECE DE RACCORDEMENT CONTENANT DU CARBONE

(30) Priorität: 30.10.2007 DE 102007051765
(43) Veröffentlichungstag der Anmeldung: 07.07.2010
(73) Patentinhaber: Witzenmann GmbH, 75175 Pforzheim (DE)
(72) Erfinder: HORNUNG, Jörg, 75248 Ölbronn-Dürrn (DE); KOLBE, Gerald, 75180 Pforzheim (DE); RUMOLD, Michael, 75172 Pforzheim (DE); MESSINA, Massimo, 76344 Eggenstein (DE)
(74) Vertreter: Lemcke, Brommer & Partner
(86) Internationale Anmeldenummer: PCT/EP2008/008691
(87) Internationale Veröffentlichungsnummer: WO 2009/056220

(56) Entgegenhaltungen:
- EP-A- 0 790 455
- WO-A-2005/026600
- DE-U1- 20 310 239
- FR-A- 2 759 141
- GB-A- 591 635

## Beschreibung

Die vorliegende Erfindung betrifft eine Anschlussverbindung für dünnwandige Schlauchleitungen mit einem kohlenstoffhaltigen Anschlussteil aus einer kohlenstoffhaltigen Eisenlegierung mit einem Kohlenstoffanteil C > 0,5%, insbesondere aus Gusseisen.

Weiterhin betrifft die vorliegende Erfindung ein Verfahren zum Verbinden einer dünnwandigen Schlauchleitung mit einem kohlenstoffhaltigen Anschlussteil aus einer kohlenstoffhaltigen Eisenlegierung mit einem Kohlenstoffanteil C > 0,5%, insbesondere aus Gusseisen.

Insbesondere bei Abgasanlagen für Kraftfahrzeuge mit Verbrennungsmotor ist es bekannt, Schlauchleitungsteile der Abgasanlage, insbesondere in Form von Metallbälgen, unter Verwendung von V-Schellen an Anschlussteilen der Abgasanlage anzuschrauben, die aus kohlenstoffhaltigen Werkstoffen, wie Gusseisen oder dergleichen bestehen. Alternativ kommen in diesem Bereich auch Steckverbindungen oder Fey-Ring-Verbindungen zum Einsatz. Bei den genannten Anschlussteilen kann es sich insbesondere um Abgaskrümmer handeln.

Derartige vorbekannte Lösungen weisen insbesondere im Blick auf immer höhere Dichtheitsanforderungen (bis hin zu Drücken von 10 bar) deutliche Nachteile auf, so dass es regelmäßig zu Leckagen im Bereich der Anschlussverbindung kommt.

Zudem benötigen die bekannten Anschlussverbindungen in axialer Richtung einen relativ großen Einbauraum, was sich nachteilig auf die zu erreichende Flexibilität der zu verwendenden Schlauchleitung auswirkt. Insbesondere wenn diese als Balg ausgebildet ist, begrenzt der für die Anschlussverbindung notwendige Bauraum die Anzahl möglicher Balgwellen nach oben. Damit verbunden ist ein relativ höher Verschleiß und eine entsprechend geringe Lebensdauer der bekannten Anschlussverbindungen.

Der Erfindung liegt die Aufgabe zugrunde, eine Anschlussverbindung der eingangs genannten Art sowie ein Verbindungsverfahren der eingangs genannten Art anzugeben, welche sich durch eine erhöhte Dichtheit und einen reduzierten Einbauraum auszeichnen. Zudem soll der Verschleiß verringert und entsprechend die Lebensdauer erhöht sein.

Die Erfindung löst diese Aufgabe mittels einer Anschlussverbindung mit den Merkmalen des Patentanspruchs 1 sowie mittels eines Verfahrens mit den Merkmalen des Patentanspruchs 11.

Vorteilhafte Weiterbildungen der erfindungsgemäßen Anschlussverbindung bzw. des erfindungsgemäßen Verfahrens sind jeweils Gegenstand von Unteransprüchen, deren Wortlaut hiermit in die Beschreibung aufgenommen wird, um unnötige Textwiederholungen zu vermeiden.

Erfindungsgemäß ist eine Anschlussverbindung für dünnwandigen Schlauchleitungen mit einem kohleristoffhaltigen Anschlussteils aus einer kohlenstoffhaltigen Eisenlegierung mit einem Kohlenstoffanteil C > 0,5%, insbesondere aus Gusseisen, wobei die Schlauchleitung durch Verschweißen an dem Anschlussteil festgelegt ist und dass die axiale Erstreckung eines Anbindequerschnittes der Schweißverbindung zwischen Schlauchleitung und Anschlussteil mindestens 50% einer Wandstärke der Schlauchleitung im Schweißbereich beträgt.

Weiterhin ist ein erfindungsgemäßes Verfahren zum Verbinden einer dünnwandigen Schlauchleitung mit einem kohlenstoffhaltigen Anschlussteil, insbesondere aus Gusseisen, wobei die Schtauchteitung durch Verschweißen, insbesondere Laser- oder Elektronenstrahlschweißen, an dem Anschlussteil stoffschlüssig festgelegt wird, wobei der Energieeintrag im Schweißbereich derart erfolgt, dass der Verschweißverbindung zwischen Schlauchleitung und Anschlussteil mindestens 50%, vorzugsweise 70% bis 80% oder sogar bis über 100% der Wandstärke der Schlauchleitung im Schweißbereich beträgt.

Nach einem Grundgedanken der vorliegenden Erfindung erfolgt also die Anbindung der dünnwandigen Schlauchleitung an das kohlenstoffhaltige Anschlussteil mittels einer Schweißverbindung, um so eine insbesondere gasdichte Verbindung herzustellen. Auf diese Weise setzt sich die vorliegende Erfindung über ein weit verbreitetes Vorurteil hinweg, wonach das Verschweißen einer kohlenstoffhaltigen Eisenlegierung mit einem Kohlenstoffanteil C > 0,5% mit einer dünnwandigen Schlauchleitung aufgrund einer Versprödung im Schmelzbereich aus wirtschaftlichen Gesichtspunkten heraus ungeeignet sei. Vielmehr erreicht die vorliegende Erfindung durch Überwindung des genannten Vorurteils einen deutlich verringerten Einbauraum in axialer Richtung für die geschaffene Anschlussverbindung, welche sich zudem durch ihre kostengünstige Herstellbarkeit auszeichnet.

Dabei bedeutet im Rahmen der vorliegenden Beschreibung der Begriff "dünnwandige Schfauchleitung", dass eine Wandstärke der Schlauchleitung im Schweißbereich höchstens 1,5 mm beträgt.

Die regelmäßig beim Schweißen von kohlenstoffhaltigem Material auftretende Martensitbildung, welche zu einer ungewollten Materialversprödung führt, lässt sich im Rahmen der vorliegenden Erfindung somit durch eine geeignete Wahl der Prozessparameter beim Schweißen reduzieren. Mit anderen Worten: Im Rahmen der vorliegenden Erfindung ist vorgesehen, dass die Schweißnaht relativ breit und flach ausgebildet ist, so dass sich ein relativ großes Verhältnis von der axialen Erstreckung des Anbindequerschnittes zu Wandstärke der Schlauchleitung im Schweißbereich ergibt. Neben dem relativ großen Anbindequerschnitt führt dies dazu, dass relativ viel nickelhaltiges Material der Schlauchleitung und nur relativ wenig kohlenstoffhaltiges Material des Anschlussteils aufgeschmolzen wird, wodurch sich die bereits erwähnte Versprödung durch Martensitbildung reduzieren lässt.

Alternativ kann die Schweißnaht auch im Zuge einer Tiefschweißung bei entsprechender Schwellintensität erzeugt werden, wobei jedoch in an sich eher nachteiliger Weise nur relativ wenig nickelhaltiges Material der Schlauchleitung aufgeschmolzen wird und aufgrund des relativ geringen Anbindequerschnitts im Kontaktbereich anders als bei der vorstehend erläuterten Variante nur eine relativ geringe Materialdurchmischung erfolgt.

Um einer Aufhärtung und Versprödung des Materials im Schweißbereich weiter entgegenzuwirken, sieht eine bevorzugte Weiterbildung der erfindungsgemäßen Anschlussverbindung vor, dass das Anschweißteil, das heißt die Schlauchleitung einen relativ hohen Nickelgehalt aufweist. Dieser liegt bei Weiterbildungen der Erfindung im Bereich von wenigstens 10%, vorzugsweise bei 25% bis 30% und höchst vorzugsweise bei 72% bis 75%.

Als Schweißverfahren zum Anbinden der Schlauchleitung an das Anschlussteil kommen - wie bereits erwähnt - insbesondere Laser- oder Elektronenstrahlschweißverfahren in Betracht. Insbesondere bei Ausgestaltungen der Erfindung, denen zufolge das Schlauchleitungsmaterial nur einen relativ niedrigen Nickelgehalt aufweist, können dabei zusätzlich noch nickelhaltige Zusätze im Schweißbereich zum Einsatz kommen, beispielsweise in Form eines zwischen Schlauchleitung und Anschlussteil angeordneten Rings oder in Form von Folien, Drähten oder Pulver, vorzugsweise aus einem Material mit dem weiter oben beschriebenen, relativ hohen Nickelgehalt, ggf. aus demselben Material wie die Schlauchleitung. Der genannte Ring hat vorzugsweise eine Dicke von 0,1 bis 1,0 mm, höchst vorzugsweise 0,3 bis 0,5 mm.

Insbesondere um die erforderliche geringe Spaltbreite von maximal 50 µm im Fügebereich zu erhalten, kann im Zuge einer Weiterbildung des erfindungsgemäßen Verfahrens vorgesehen sein, dass die Schweißteile vor dem Verschweiβen geheftet werden. Eine Reinigung der zu verbindenden Bereiche sollte in jedem Fall erfolgen.

Wie bereits erwähnt, müssen die zu verbindenden Bereiche der Schlauchleitung des Anschlussteils im Wesentlichen spaltfrei sein. Zu diesem Zweck sieht eine andere Weiterbildung der erfindungsgemäßen Anschlussverbindung vor, dass in diesem Bereich eine selbsthemmende Verpressung der zu verbindenden Teile dadurch erreicht wird, dass die Schlauchleitung und/oder das Anschlussteil in einem Überlappungsbereich dieser beiden Komponenten eine bezogen auf eine Fügefläche der jeweils anderen Komponente geneigte Fügefläche aufweist, so dass die Fügeflächen nicht parallel zueinander verlaufen.

Die erfindungsgemäße Lösung bzw. ihre jeweiligen Weiterbildungen sorgen dafür, dass die Anzahl von Schnittstellen im Gesamtsystem einer Abgasanlage reduziert wird, was entsprechend zu einer Reduzierung von Leckageverlusten führt.

Aufgrund der Tatsache, dass bei unverändertem gesamten Einbauraum der für die Schlauchleitung zur Verfügung stehende Einbauraum vergrößert wird, lässt sich die Lebensdauer der Schlauchleitung optimieren.

Durch die erfindungsgemäß erreichte Reduzierung der Anzahl für die Anschlussverbindung zu verwendender Einzelteile kommt es darüber hinaus zu einer Reduzierung in puncto Herstellungskosten und Montageaufwand.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: eine Ausgestaltung der erfindungsgemäßen Anschlussverbindung, teilweise im Längsschnitt;
- Figur 2: eine Detailvergrößerung der Schweißnaht in Figur 1; und
- Figur 3: eine weitere Ausgestaltung der erfindungsgemäßen Anschlussver-bindung, teilweise im Längsschnitt.

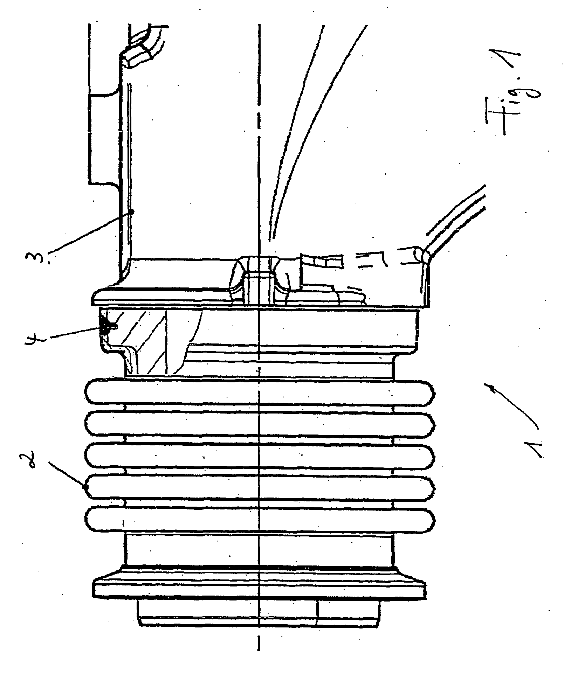

Figur 1 zeigt eine Anschlussverbindung 1 für eine dünnwandige Schlauchleitung 2 in Form eines metallischen Ringwellschlauchs oder Balgs mit einem Gussteil 3, vorliegend einem Krümmer für die Abgasanlage eines Kraftfahrzeugs, das bzw. der aus Gusseisen hergestellt ist und einen Kohlenstoffgehalt C > 0,5% aufweist. Die Schlauchleitung 2 und das Gussteil 3 sind im Bereich einer umlaufenden Schweißnaht 4 durch Verschweißen stoffschlüssig miteinander verbunden bzw. aneinander festgelegt.

Wie der Fachmann erkennt, ist die vorliegende Erfindung nicht auf die vorstehend exemplarisch genannten Ausgestaltungen der Schlauchleitung 2 und des Gussteils 3 beschränkt, sondern kann überall dort Anwendung finden, wo eine relativ dünnwandige Schlauchleitung 2 mit einem kohlenstoffhaltigen Anschlussteil 3 insbesondere gasdicht zu verbinden ist.

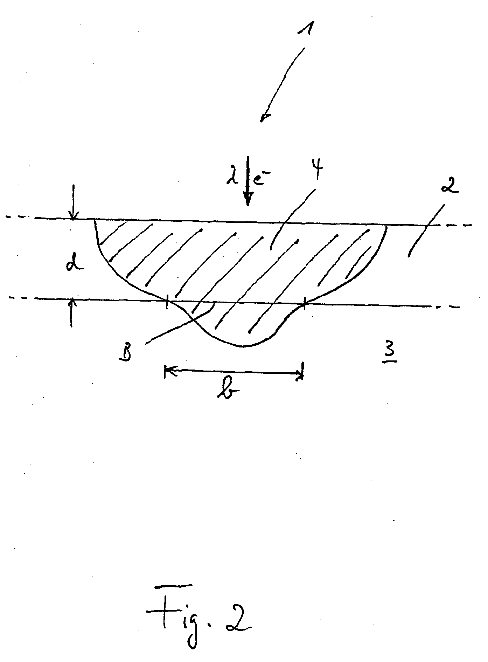

Figur 2 zeigt eine Detailansicht der Schweißverbindung 4 gemäß Figur 1. Dabei ist die Schweißverbindung 4 in Figur 2 schraffiert dargestellt. Gleiche Bezugszeichen bezeichnen ansonsten in Figur 1 und Figur 2 gleiche bzw. gleichwirkende Elemente.

Wie der Figur 2 zu entnehmen ist, beträgt eine Wandstärke der Schlauchleitung 2 im Schweißbereich beispielsweise d ≤ 1,5 mm.

Das metallische Material der Schlauchleitung 2 weist einen vorzugsweise einen Nickelgehalt von wenigstens 10% auf, um einer Versprödung im Schweißbereich entgegenzuwirken. Nach dem Verschweißen sind das Gussteil 3 und die Schlauchleitung 2 über einen Anbindebereich B mit (durchschnittlichem) axialen Erstreckung b verbunden. Um eine haltbare Schweißverbindung zwischen Schlauchleitung 2 und Anschlussteil 3 zu gewährleisten, beträgt das Verhältnis b/d im Zuge bevorzugter Ausgestaltungen der vorliegenden Erfindung mindestens 0,5 und kann bis auf Werte > 1 anwachsen. Die in Figur 2 gezeigte, relativ flache Ausbildung der Schweißverbindung 4, das heißt ein geringes Vordringen der Schmelzzone in das Material des Anschlussteils 3 trägt dazu bei, eine Materialversprödung, insbesondere des Materials des Anschlussteils 3, im Schweißbereich zu vermeiden. Einer derartigen Versprödung wird zudem durch einen relativ hohen Nickelgehalt des Schlauchleitungsmaterials entgegengewirkt. Zu diesem Zweck kann im Rahmen der vorliegenden Erfindung vorgesehen sein, dass vor dem Aufschieben der Schlauchleitung 2 auf das Anschlussteil 3 im Anbindungsbereich B ein zusätzlicher nickelhaltiger Werkstoff, insbesondere in Ring-, Folien-, Draht- oder Pulverform in den Schweißbereich oder insbesondere in den Kontaktbereich von Schlauchleitung und Anschlussteil 3 eingebracht wird, was jedoch in Figur 2 nicht explizit dargestellt ist.

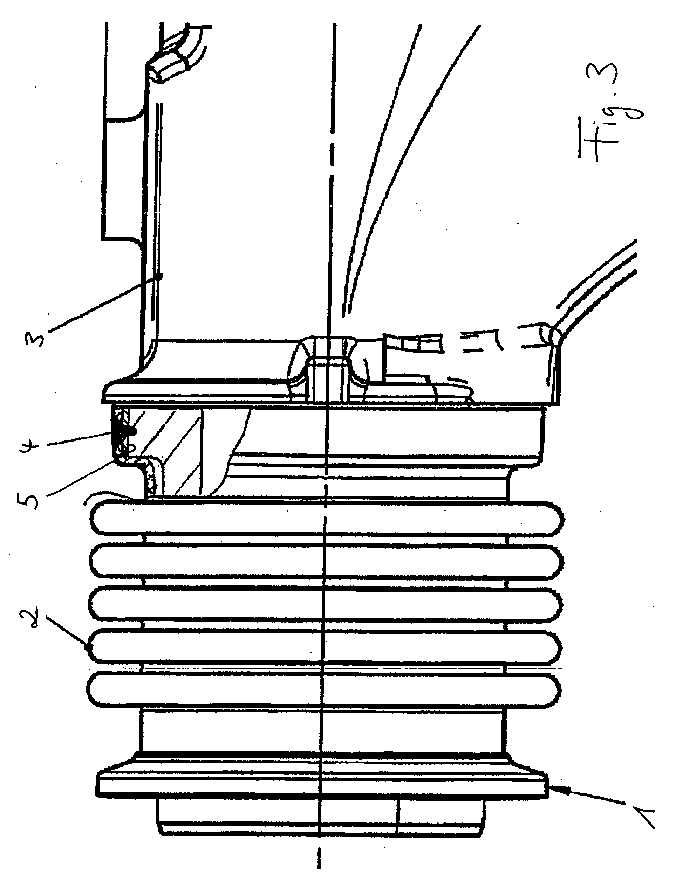

Dagegen zeigt Figur 3 eine weitere Ausgestaltung der erfindungsgemäßen Anschlussverbindung, bei der zwischen Schlauchleitung 2 und Anschlussteil 3 ein Zwischenring 5 aus einem relativ stark nickelhaltigen Werkstoff vorgesehen ist, welcher demjenigen der Schlauchleitung 2 entsprechen kann.

Des Weiteren können die Schlauchleitung 2 und das Anschlussteil 3 vor dem Verschweißen zusammengeheftet werden, was ebenfalls in Figur 2 nicht explizit dargestellt ist.

Abweichend von der in Figur 2 gezeigten Art der Schweißverbindung zwischen Schlauchleitung 2 und Anschlussteil 3 kann die Anbindung der Schlauchleitung 2 eines Anschlussteils 3 auch durch Tiefschweißung erfolgen, was jedoch gegebenenfalls eine verminderte axiale Erstreckung des Anbindequerschnittes b verbunden mit einer verstärkten Aufschmelzung des kohlenstoffhaltigen Materials des Anschlussteils 3 zur Folge hat.

Obwohl jeweilige Fügeflächen der Schlauchleitung 2 des Anschlussteils 3 in Figur 2 parallel dargestellt sind, kann alternativ für die Anschlussverbindung 1 auch vorgesehen sein, dass eine der genannten Fügeflächen (die in Figur 2 nicht explizit bezeichnet sind) gegenüber der jeweils anderen Fügefläche geneigt ist.

Zum Verbinden der Schlauchleitung 2 mit dem Anschlussteil 3 werden im Rahmen der vorliegenden Erfindung vorteilhafterweise an sich bekannte Laser-oder Elektronenstrahl-Schweißverfahren verwendet, was in Figur 2 schematisch dargestellt ist (Bezugszeichen λ bzw. e⁻).

Auf diese Weise lässt sich erfindungsgemäß eine insbesondere gasdichte Verbindung der Schlauchleitung 2 mit dem Anschlussteil 3 erreichen, die sich neben günstigen Herstellungskosten vor allem durch ihren geringen Bauraum auszeichnet, welcher beispielsweise bei der Ausgestaltung der Schlauchleitung 2 als Balg (vgl. Figur 1 und Figur 3) eine Erhöhung der Balgwellenanzahl und damit eine Vergrößerung der Flexibilität bei gleichem Einbauraum ermöglicht, was zur Erhöhung der Lebensdauer der Anordnung beiträgt.

## Patentansprüche

1. Anschlussverbindung (1) für dünnwandige Schlauchleitungen (2) mit einem kohlenstoffhaltigen Anschlussteil (3), aus einer kohlenstoffhaltigen Eisenlegierung mit einem Kohlenstoffanteil C > 0,5%, insbesondere aus Gusseisen, **dadurch gekennzeichnet, dass** die Schlauchleitung (2) durch Verschweißen an dem Anschlussteil (3) festgelegt ist und dass die axiale Erstreckung eines Anbindequerschnittes (b) der Schweißverbindung (4) zwischen Schlauchleitung (2) und Anschlussteils (3) mindestens 50% einer Wandstärke (d) der Schlauchleitung (2) im Schweißbereich beträgt.

2. Anschlussverbindung (1) nach Anspruch 1, **dadurch gekennzeichnet, dass** die axiale Erstreckung eines Anbindequerschnittes (b) mindestens 80% der Wandstärke (d) der Schlauchleitung (2) im Schweißbereich beträgt.

3. Anschlussverbindung (1) nach Anspruch 1 oder 2, **dadurch gekennzeichnet, dass** die axiale Erstreckung eines Anbindequerschnittes (b) mindestens der Wandstärke (d) der Schlauchleitung (2) im Schweißbereich entspricht.

4. Anschlussverbindung (1) nach mindestens einem der vorhergehenden Ansprüche, **dadurch gekennzeichnet, dass** das Anschlussteil (3) ein Abgaskrümmer ist.

5. Anschlussverbindung (1) nach mindestens einem der vorhergehenden Ansprüche, **dadurch gekennzeichnet, dass** die Schlauchleitung (2) ein metallischer Ringwellschlauch oder Balg ist.

6. Anschlussverbindung (1) nach mindestens einem der vorhergehenden Ansprüche, **dadurch gekennzeichnet, dass** die Wandstärke (d) der Schlauchleitung (2) im Schweißbereich 1,5 mm oder weniger beträgt.

7. Anschlussverbindung (1) nach mindestens einem der vorhergehenden Ansprüche, **dadurch gekennzeichnet, dass** das Schlauchleitungsmaterial einen Nickelgehalt von wenigstens 10%, vorzugsweise 25-30%, höchst vorzugsweise 72-75% aufweist.

8. Anschlussverbindung (1) nach mindestens einem der vorhergehenden Ansprüche, **dadurch gekennzeichnet, dass** die Schweißverbindung (4) zwischen Schlauchleitung (2) und Anschlussteil (3) durch Laserschweißen oder durch Elektronenschweißen hergestellt ist.

9. Anschlussverbindung (1) nach mindestens einem der vorhergehenden Ansprüche, **dadurch gekennzeichnet, dass** die Schweißverbindung (4) zwischen Schlauchleitung (2) und Anschlussteil (3) durch Tiefschweißung hergestellt ist.

10. Anschlussverbindung (1) nach mindestens einem der vorhergehenden Ansprüche, **dadurch gekennzeichnet, dass** die Schlauchleitung (2) und/oder das Anschlussteil (3) in einem Überlappungsbereich dieser beiden Komponenten eine bezogen auf eine Fügefläche der jeweils anderen Komponente geneigte Fügefläche aufweist.

11. Verfahren zum Verbinden einer dünnwandigen Schlauchleitung (2) mit einem kohlenstoffhaltigen Anschlussteil (3), insbesondere aus Gusseisen, **dadurch gekennzeichnet, dass** die Schlauchleitung (2) durch Verschweißen an dem Anschlussteil (3) stoffschlüssig festgelegt wird, wobei der Energieeintrag im Schweißbereich derart erfolgt, dass die axiale Erstreckung eines Anbindequerschnittes (b) der Schweißverbindung (4) zwischen Schlauchleitung (2) und Anschlussteil (3) mindestens 50% einer Wandstärke (d) der Schlauchleitung (2) im Schweißbereich beträgt.

12. Verfahren nach Anspruch 11, **dadurch gekennzeichnet, dass** das Verbinden durch Laser- oder Elektronenstrahlschweißen erfolgt.

13. Verfahren nach Anspruch 11 oder 12, **dadurch gekennzeichnet, dass** vor dem Verschweißen ein nickelhaltiger Werkstoff in den Schweißbereich eingebracht wird.

14. Verfahren nach Anspruch 13, **dadurch gekennzeichnet, dass** der nickelhaltige Werkstoff in Ring-, Folien-, Draht- oder Pulverform in den Schweißbereich eingebracht wird.

15. Verfahren nach mindestens einem der Ansprüche 11 bis 14, **dadurch gekennzeichnet, dass** die Schlauchleitung (2) und das Anschlussteil (3) vor dem Verschweißen geheftet werden.

## Claims

1. An attachment connection (1) for thin-walled hose lines (2) with a carbon-containing attachment member (3) of a carbon-containing iron alloy with a carbon content C>0.5%, particularly of cast iron, **characterised in that** the hose line (2) is fixed in position by welding to the attachment member (3) and that the axial extent of a connecting cross section (b) of the weld connection (4) between the hose line (2) and attachment member (3) is at least 50% of a wall thickness (d) of the hose line in the weld region.

2. An attachment connection (1) as claimed in claim 1, **characterised in that** the axial extent of a connecting cross section (b) is at least 80% of the wall thickness (d) of the hose line (2) in the weld region.

3. An attachment connection (1) as claimed in claim 1 or 2, **characterised in that** the axial extent of a connecting cross section (b) corresponds at least to the wall thickness (d) of the hose line (2) in the weld region.

4. An attachment connection (1) as claimed in at least one of the preceding claims, **characterised in that** the attachment member (3) is an exhaust gas manifold.

5. An attachment connection (1) as claimed in at least one of the preceding claims, **characterised in that** the hose line (2) is a metallic corrugated tube or bellows.

6. An attachment connection (1) as claimed in at least one of the preceding claims, **characterised in that** the wall thickness (d) of the hose line (2) in the weld region is 1.5mm or less.

7. An attachment connection (1) as claimed in at least one of the preceding claims, **characterised in that** the hose line material has a nickel content of at least 10%, preferably 25-30%, at most preferably 72-75%.

8. An attachment connection (1) as claimed in at least one of the preceding claims, **characterised in that** the weld connection (4) between the hose line (2) and attachment member (3) is produced by laser welding or by electron beam welding.

9. An attachment connection (1) as claimed in at least one of the preceding claims, **characterised in that** the weld connection (4) between the hose line (2) and attachment member (3) is produced by deep penetration welding.

10. An attachment connection (1) as claimed in at least one of the preceding claims, **characterised in that** the hose line (2) and/or the attachment member (3) has, in a region in which these two components overlap, an inclined joint surface with respect to a joint surface on the other component.

11. A method of connecting a thin-walled hose line (2) to a carbon-containing attachment member (3) of a carbon-containing iron alloy with a carbon content C>0.5%, particularly of cast iron, **characterised in that** the hose line (2) is fixed in position by a positive material bond by welding to the attachment member (3), wherein the energy input in the weld region is effected so that the axial extent of a connecting cross section (b) of the weld connection (4) between the hose line (2) and attachment member (3) is at least 50% of a wall thickness (d) of the hose line (2) in the weld region.

12. A method as claimed in claim 11, **characterised in that** the connection is effected by laser or electron beam welding.

13. A method as claimed in claim 11 or 12, **characterised in that** the before the welding process a nickel-containing material is positioned in the weld region.

14. A method as claimed in claim 13, **characterised in that** the nickel-containing material is positioned in the weld region in ring, sheet, wire or powder form.

15. A method as claimed in at least one of claims 11 to 14, **characterised in that** the hose line (2) and the attachment member (3) are tacked together before the welding process.

## Revendications

1. Liaison de raccordement (1) pour relier des conduites flexibles (2) à paroi mince à un élément de raccordement (3) contenant du carbone, constitué d'un alliage de fer contenant du carbone avec une part de carbone C > 0,5% , en particulier en fonte, **caractérisée en ce que** la conduite flexible (2) est fixée par soudage à l'élément de raccordement (3), et **en ce que** l'étendue axiale d'une section de rattachement (b) de la liaison soudée (4) entre la conduite flexible (2) et l'élément de raccordement (3) est égale à au moins 50% d'une épaisseur de paroi (d) de la conduite flexible (2) dans la région de soudage.

2. Liaison de raccordement (1) selon la revendication 1, **caractérisée en ce que** l'étendue axiale de la section de rattachement (b) est égale à au moins 80% de l'épaisseur de paroi (d) de la conduite flexible (2) dans la région de soudage.

3. Liaison de raccordement (1) selon la revendication 1 ou 2, **caractérisée en ce que** l'étendue axiale de la section de rattachement (b) est au moins égale à l'épaisseur de paroi (d) de la conduite flexible (2) dans la région de soudage.

4. Liaison de raccordement (1) selon au moins une des revendications précédentes, **caractérisée en ce que** l'élément de raccordement (3) est un collecteur d'échappement.

5. Liaison de raccordement (1) selon au moins une des revendications précédentes, **caractérisée en ce que** la conduite flexible (2) est un tuyau souple à ondulations annulaires ou un soufflet.

6. Liaison de raccordement (1) selon au moins une des revendications précédentes, **caractérisée en ce que** l'épaisseur de paroi (d) de la conduite flexible (2) dans la région de soudage est égale à 1,5 mm ou moins.

7. Liaison de raccordement (1) selon au moins une des revendications précédentes, **caractérisée en ce que** le matériau de la conduite flexible présente une teneur en nickel d'au moins 10%, de préférence de 25 à 30%, d'une manière particulièrement préférée de 72 à 75%.

8. Liaison de raccordement (1) selon au moins une des revendications précédentes, **caractérisée en ce que** la liaison soudée (4) entre la conduite flexible (2) et l'élément de raccordement (3) est réalisée par soudage au laser ou par soudage par bombardement électronique.

9. Liaison de raccordement (1) selon au moins une des revendications précédentes, **caractérisée en ce que** la liaison soudée (4) entre la conduite flexible (2) et l'élément de raccordement (3) est réalisée par soudage profond.

10. Liaison de raccordement (1) selon au moins une des revendications précédentes, **caractérisée en ce que** la conduite flexible - (2) et/ou l'élément de raccordement (3) présente, dans une région de chevauchement de ces deux composants, une face de joint inclinée par rapport à une face de joint de l'autre composant respectif.

11. Procédé pour relier une conduite flexible (2) à paroi mince à un élément de raccordement (3) contenant du carbone, en particulier en fonte, **caractérisé en ce que** la conduite flexible (2) est fixée à l'élément de raccordement (3) par liaison de matière par soudage, sachant que l'apport d'énergie dans la région de soudage s'effectue de telle sorte que l'étendue axiale d'une section de rattachement (b) de la liaison soudée (4) entre la conduite flexible (2) et l'élément de raccordement (3) est égale à au moins 50% d'une épaisseur de paroi (d) de la conduite flexible (2) dans la région de soudage.

12. Procédé selon la revendication 11, **caractérisé en ce que** la liaison s'effectue par soudage au laser ou par soudage par bombardement électronique.

13. Procédé selon la revendication 11 ou 12, **caractérisé en ce qu'**on introduit avant le soudage un matériau à teneur en nickel dans la région de soudage.

14. Procédé selon la revendication 11, **caractérisé en ce que** le matériau à teneur en nickel est introduit dans la région de soudage sous forme de bague, de feuille, de fil métallique ou de poudre.

15. Procédé selon au moins une des revendications 11 à 14, **caractérisé en ce que** la conduite flexible (2) et l'élément de raccordement (3) sont attachés avant le soudage.
